# EUROPEAN PATENT APPLICATION

(11) **EP 4 230 697 A1**
(43) Date of publication of application: **23.08.2023**
(21) Application number: 22161753.3
(22) Date of filing: 14.03.2022
(51) Int. Cl.: C08L 69/00

(54) **HYDROLYSIS-RESISTANT POLYCARBONATE COMPOSITION**

(30) Priority: 16.02.2022 WO PCT/CN2022/076437
(71) Applicant: Covestro Deutschland AG, 51373 Leverkusen (DE)
(72) Inventor: WANG, Leith, Shanghai 201900 (CN); WANG, Xiaoxiang, Shanghai 200123 (CN)
(74) Representative: Levpat

(57) **Abstract**

The present invention relates to a polycarbonate composition comprising the following components A-E, relative to the total weight of the composition:
A) from 55 wt.% to 92 wt.% of at least one aromatic polycarbonate;
B) from 5 wt.% to 40 wt.% of a glass fiber;
C) from 0.04 wt.% to less than 0.10 wt.% of a fluorine-containing metal organic sulfonate;
D) from 2 wt.% to 9 wt.% of a polysilsesquioxane; and
E) from 0.11 wt.% to 1.0 wt.% of an anti-dripping agent.

The present invention also relates to a shaped article made from the composition. The polycarbonate composition according to the present invention has a good combination of hydrolysis resistance and flame retardance.

## Description

### TECHNICAL FIELD

The present invention relates to a hydrolysis-resistant polycarbonate (PC) composition, and a shaped article made from the same.

### BACKGROUND ART

Polycarbonate resin compositions are excellent in mechanical properties and electric characteristics such as dielectric strength, surface/volume resistance, dielectric constant, and are used generally for automobile applications as well as for electronic and electric device applications. Efforts have been made to develop polycarbonate compositions meeting the requirements for various applications.

US 8927636 B2 discloses a method for achieving good flame resistance, impact resistance and surface quality by incorporating a metal organic sulfonate, a fluoropolymer, specified silsesquioxane particles and a specified graft copolymer into a polycarbonate resin.

US 6518357 B1 discloses formulations which achieve V-0 at 1/8 inch and 1/16 inch thickness according to UL94:2015, obtained by blending polycarbonate with 3 different siloxane additives: poly(phenyl methyl siloxane), (phenyl silsesquioxane)-co-(dimethyl siloxane), and poly(phenyl vinyl silsesquioxane).

JP 4890766 B2 discloses a light diffusing aromatic polycarbonate resin composition, in which special polyorganosilsesquioxane particles, weight loss thereof at 400-500 °C is 1 percent in (TGA) thermal gravimetric conforming to (B) JIS K7120, was used as light diffusing agent and added into polycarbonate. The light-diffusing aromatic polycarbonate resin composition exhibits high brightness when used in the direct type backlight light diffusion plate.

There are many requirements on the plastic housing materials for outdoor applications when facing the harsh conditions such as extreme high or low temperature, high humidity, and fire risk etc. For electronic and electronic device (EE&A) outdoor applications, it requires plastic housing materials having good flame retardancy and excellent hydrolysis resistance. Excellent hydrolysis resistance certification requires the material to keep its flame-retardant performance unchanged after 7 days immersion in hot water of 70 °C.

The loading of traditionally flame retardant agents such as potassium perfluorobutane sulfonate must be more than 1000 ppm by weight, to achieve UL746C (2018) f1 performance in glass fiber reinforced polycarbonate composition. However, since 2020 it is required by REACH (registration, evaluation, authorization and restriction of chemicals) regulation in the European Union that the loading of potassium perfluorobutane sulfonate in polymer blends should be less than 1000 ppm by weight. Therefore the state of art cannot meet the relevant requirements of REACH and UL746C f1 at the same time, while both regulations have to be fulfilled for the EEA industry.

The known commercially available flame-retardant polycarbonate compositions containing less than 1000 ppm by weight of potassium perfluorobutane sulfonate with V-0 performance cannot achieve V-0 performance after 7 days immersion in hot water of 70 oC according to UL94:2015 and hence are not ideal for outdoor application.

Therefore, there is still a need for a polycarbonate composition with a V-0 performance according to UL94:2015 having a good hydrolysis resistance, expressed in that an article with a thickness of 1.5 mm prepared therefrom can also achieve V-0 performance after 7 days immersion in hot water of 70 °C.

### SUMMARY OF THE INVENTION

One object of the present patent application is thus to provide a polycarbonate composition which has a good combination of hydrolysis resistance and flame retardancy, an article with a thickness of 1.5 mm prepared therefrom can achieve V0 performance before and after 7 days immersion in hot water of 70 °C, while meeting the requirements of REACH.

According to the present invention, a composition is hydrolysis resistant, when the article with a thickness of 1.5 mm prepared therefrom achieves V0 performance according to UL94:2015 before and after 7 days immersion in hot water of 70 °C.

A first aspect of the present invention is to provide a hydrolysis-resistant polycarbonate composition comprising the following components A-E, relative to the total weight of the composition:
A) from 55 wt.% to 92 wt.% of at least one aromatic polycarbonate;
B) from 5 wt.% to 40 wt.% of a glass fiber;
C) from 0.04 wt.% to less than 0.10 wt.% of a fluorine-containing metal organic sulfonate;
D) from 2 wt.% to 9 wt.% of polysilsesquioxane; and
E) from 0.11 wt.% to 1.0 wt.% of anti-dripping agent.

A second aspect of the present invention is to provide a shaped article made from a polycarbonate composition according to the first aspect the present invention.

A third aspect of the present invention is to provide a process for preparing the shaped article according to the second aspect the present invention, comprising injection moulding, extrusion moulding, blow moulding or thermoforming the polycarbonate composition according to the first aspect of the present invention.

The polycarbonate composition according to the present invention has a good combination of hydrolysis resistance and flame retardancy.

The polycarbonate composition according to the present invention achieves a V0 classification even with a low thickness, such as of 1.5 mm, even 1.0 mm, after 7 days immersion in water at 70 °C, as measured in accordance with UL94:2015.

Other subjects and characteristics, aspects and advantages of the present invention will emerge even more clearly on reading the description and the examples that follow.

### DETAILED DESCRIPTION OF THE INVENTION

In that which follows and unless otherwise indicated, the limits of a range of values are included within this range, in particular in the expressions "between... and... " and "from ... to ...".

Throughout the present application, the term "comprising" is to be interpreted as encompassing all specifically mentioned features as well as optional, additional, unspecified ones.

Unless defined otherwise, all technical and scientific terms used herein have the same meaning as commonly understood by one of ordinary skill in the art to which the present invention pertains. When the definition of a term in the present description conflicts with the meaning as commonly understood by those skilled in the art the present invention belongs to, the definition described herein shall apply.

Unless otherwise specified, all numerical values expressing amount of ingredients and the like which are used in the description and claims are to be understood as being modified by the term "about".

### Component A

The polycarbonate compositions according to the present invention comprise at least one aromatic polycarbonate as component A. The aromatic polycarbonate can be a mixture of one or more aromatic polycarbonates.

According to the invention, "aromatic polycarbonates" or else just "polycarbonates" is to be understood as meaning both homopolycarbonates and copolycarbonates, in particular aromatic ones. These polycarbonates may be linear or branched in known fashion. According to the invention, mixtures of polycarbonates may also be used.

A portion, preferably up to 80 mol%, more preferably of 20 mol% to 50 mol%, of the carbonate groups in the polycarbonates used in accordance with the invention may have been replaced by aromatic dicarboxylic ester groups. Polycarbonates of this type that incorporate not only acid radicals derived from carbonic acid but also acid radicals derived from aromatic dicarboxylic acids in the molecular chain are referred to as aromatic polyester carbonates. For the purposes of the present invention, they are covered by the umbrella term "thermoplastic aromatic polycarbonates".

Replacement of the carbonate groups by the aromatic dicarboxylic ester groups proceeds essentially stoichiometrically and also quantitatively and the molar ratio of the reaction partners is therefore also reflected in the final polyester carbonate. The aromatic dicarboxylic ester groups can be incorporated either randomly or blockwise.

Aromatic polycarbonates selected in accordance with the invention preferably have weight-average molecular weights M_{w} of 15 000 to 40 000 g/mol, more preferably of 16 000 to 34 000 g/mol, even more preferably of 17 000 to 33 000 g/mol, most preferably of 19 000 to 32 000 g/mol. The values for M_{w} here are determined by a gel permeation chromatography, calibrated against bisphenol A polycarbonate standards using dichloromethane as eluent, calibration with linear polycarbonates (made of bisphenol A and phosgene) of known molar mass distribution from PSS Polymer Standards Service GmbH, Germany; calibration according to method 2301-0257502-09D (2009 Edition in German) from Currenta GmbH & Co. OHG, Leverkusen. The eluent is dichloromethane. Column combination of crosslinked styrene-divinylbenzene resins. Diameter of analytical columns: 7.5 mm; length: 300 mm. Particle sizes of column material: 3 µm to 20 µm. Concentration of solutions: 0.2% by weight. Flow rate: 1.0 ml/min, temperature of solutions: 30°C. Detection uses a refractive index (RI) detector.

The polycarbonates are preferably produced by the interfacial process or the melt transesterification process, which have been described many times in the literature.

With regard to the interfacial process reference is made for example to H. Schnell, "Chemistry and Physics of Polycarbonates", Polymer Reviews, Vol. 9, Interscience Publishers, New York 1964 p. 33 et seq., to Polymer Reviews, Vol. 10, "Condensation Polymers by Interfacial and Solution Methods", Paul W. Morgan, Interscience Publishers, New York 1965, Chapt. VIII, p. 325, to Dres. U. Grigo, K. Kircher and P. R- Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pp. 118-145 and also to EP 0 517 044 A1.

The melt transesterification process is described, for example, in the "Encyclopedia of Polymer Science", Vol. 10 (1969), Chemistry and Physics of Polycarbonates, Polymer Reviews, H. Schnell, Vol. 9, John Wiley and Sons, Inc. (1964), and in patent specifications DE 10 31 512 A and US 6,228,973 B1.

Particulars pertaining to the production of polycarbonates are disclosed in many patent documents spanning approximately the last 40 years. Reference may be made here by way of example to Schnell, "Chemistry and Physics of Polycarbonates", Polymer Reviews, Volume 9, Interscience Publishers, New York, London, Sydney 1964, to D. Freitag, U. Grigo, P.R. Müller, H. Nouvertné, BAYER AG, "Polycarbonates" in Encyclopedia of Polymer Science and Engineering, Volume 11, Second Edition, 1988, pages 648-718, and finally to U. Grigo, K. Kirchner and P.R. Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pages 117-299.

The production of aromatic polycarbonates is effected for example by reaction of dihydroxyaryl compounds with carbonic halides, preferably phosgene, and/or with aromatic dicarboxyl dihalides, preferably benzenedicarboxyl dihalides, by the interfacial process, optionally using chain terminators and optionally using trifunctional or more than trifunctional branching agents, production of the polyester carbonates being achieved by replacing a portion of the carbonic acid derivatives with aromatic dicarboxylic acids or derivatives of the dicarboxylic acids, specifically with aromatic dicarboxylic ester structural units according to the carbonate structural units to be replaced in the aromatic polycarbonates. Preparation via a melt polymerization process by reaction of dihydroxyaryl compounds with, for example, diphenyl carbonate is likewise possible.

Dihydroxyaryl compounds suitable for the production of polycarbonates are for example hydroquinone, resorcinol, dihydroxydiphenyls, bis(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulfones, bis(hydroxyphenyl) sulfoxides, α,α'-bis(hydroxyphenyl)diisopropylbenzenes, phthalimidines derived from derivatives of isatin or phenolphthalein and the ring-alkylated, ring-arylated and ring-halogenated compounds thereof.

Preferred dihydroxyaryl compounds are 4,4'-dihydroxydiphenyl, 2,2-bis(4-hydroxyphenyl)propane (bisphenol A), 2,4-bis(4-hydroxyphenyl)-2-methylbutane, 1,1-bis(4-hydroxyphenyl)-p-diisopropylbenzene, 2,2-bis(3-methyl-4-hydroxyphenyl)propane, dimethylbisphenol A, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)-p-diisopropylbenzene and 1,1-bis(4-hydroxyphenyl)-3,3,5-trimethylcyclohexane and also the bisphenols (I) to (III) 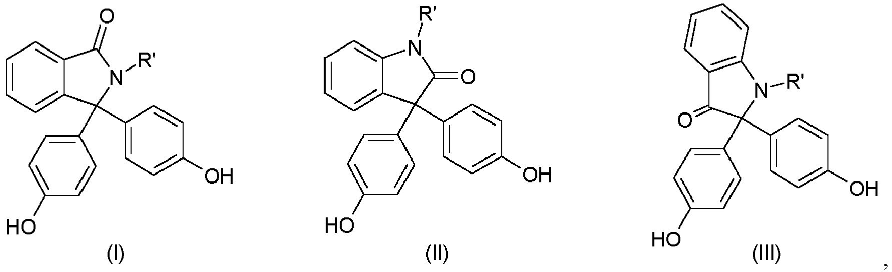 in which R' in each case stands for C₁- to C₄-alkyl, aralkyl or aryl, preferably for methyl or phenyl, very particularly preferably for methyl.

Particularly preferred dihydroxyaryl compounds are 2,2-bis(4-hydroxyphenyl)propane (bisphenol A), 2,2-bis(3,5-dimethyl-4-hydroxyphenyl)propane, 1,1-bis(4-hydroxyphenyl)cyclohexane, 1,1-bis(4-hydroxyphenyl)-3,3,5-trimethylcyclohexane, 4,4'-dihydroxybiphenyl, and dimethylbisphenol A and also the diphenols of formulae (I), (II) and (III).

These and other suitable dihydroxyaryl compounds are described for example in US 3 028 635 A, US 2 999 825 A, US 3 148 172 A, US 2 991273 A, US 3 271 367 A, US 4 982 014 A und US 2 999 846 A, in DE 1 570 703 A, DE 2063 050 A, DE 2 036 052 A, DE 2 211 956 A and US 2 999 846 A, in DE 1 570 703 A, DE 2063 050 A, DE 2 036 052 A, DE 2 211 956 A and DE 3 832 396 A, in FR 1 561 518, in the monograph "H. Schnell, Chemistry and Physics of Polycarbonates, Interscience Publishers, New York 1964" and also in JP 62039/1986 A, JP 62040/1986 A and JP 105550/1986 A.

In the case of homopolycarbonates only one dihydroxyaryl compound is used; in the case of copolycarbonates two or more dihydroxyaryl compounds are used. The dihydroxyaryl compounds employed, similarly to all other chemicals and assistants added to the synthesis, may be contaminated with the contaminants from their own synthesis, handling and storage. However, it is desirable to use raw materials of the highest possible purity.

Suitable carbonic acid derivatives are for example phosgene and diphenyl carbonate.

Suitable chain terminators that may be used in the production of polycarbonates are monophenols. Suitable monophenols are for example phenol itself, alkylphenols such as cresols, p-tert-butylphenol, cumylphenol and mixtures thereof.

Preferred chain terminators are the phenols mono- or polysubstituted by linear or branched C₁- to C₃₀-alkyl radicals, preferably unsubstituted or substituted by tert-butyl. Particularly preferred chain terminators are phenol, cumylphenol and/or p-tert-butylphenol.

The amount of chain terminator to be employed is preferably 0.1 to 5 mol% based on the moles of diphenols employed in each case. The addition of the chain terminators may be effected before, during or after the reaction with a carbonic acid derivative.

Suitable branching agents are the trifunctional or more than trifunctional compounds familiar in polycarbonate chemistry, in particular those having three or more than three phenolic OH groups. Suitable branching agents are for example 1,3,5-tri(4-hydroxyphenyl)benzene, 1,1,1 -tri(4-hydroxyphenyl)ethane, tri(4-hydroxyphenyl)phenylmethane, 2,4-bis(4-hydroxyphenylisopropyl)phenol, 2,6-bis(2-hydroxy-5 '-methylbenzyl)-4-methylphenol, 2-(4-hydroxyphenyl)-2-(2,4-dihydroxyphenyl)propane, tetra(4-hydroxyphenyl)methane, tetra(4-(4-hydroxyphenylisopropyl)phenoxy)methane and 1,4-bis((4',4"-dihydroxytriphenyl)methyl)benzene and 3,3-bis(3-methyl-4-hydroxyphenyl)-2-oxo-2,3-dihydroindole.The amount of the branching agents for optional employment is preferably 0.05 mol% to 2.00 mol%, based on moles of dihydroxyaryl compounds used in each case. The branching agents may be either initially charged together with the dihydroxyaryl compounds and the chain terminators in the aqueous alkaline phase or added dissolved in an organic solvent before the phosgenation. In the case of the transesterification process the branching agents are employed together with the dihydroxyaryl compounds.

Particularly preferred polycarbonates are the homopolycarbonate based on bisphenol A, the homopolycarbonate based on 1,1-bis(4-hydroxyphenyl)-3,3,5-trimethylcyclohexane, 4,4'-dihydroxybiphenyl, and the copolycarbonates based on the two monomers bisphenol A and 1,1-bis(4-hydroxyphenyl)-3,3,5-trimethylcyclohexane and also homo- or copolycarbonates derived from the diphenols of formulae (I), (II) and (III) 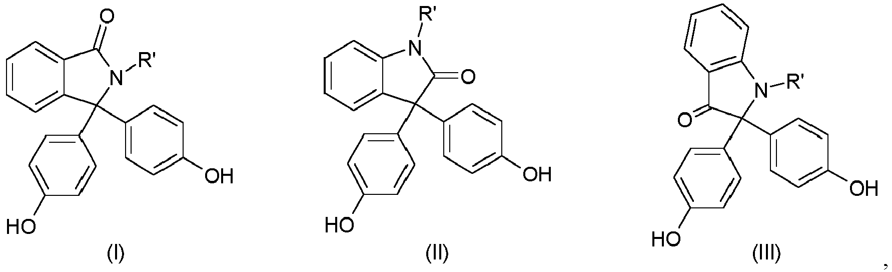 in which R' in each case stands for C₁- to C₄-alkyl, aralkyl or aryl, preferably for methyl or phenyl, very particularly preferably for methyl.

Preferred are also polycarbonates for the production of which dihydroxyaryl compounds of the following formula (1a) have been used: 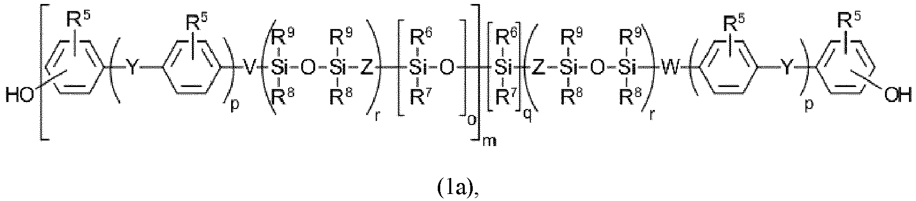 wherein
R⁵ stands for hydrogen or C₁- to C₄-alkyl, C₁- to C₄-alkoxy, preferably for hydrogen or methyl or methoxy particularly preferably for hydrogen,
R⁶, R⁷, R⁸ and R⁹ mutually independently stand for C₆- to C₁₂-aryl or C₁- to C₄-alkyl, preferably phenyl or methyl, in particular for methyl,
Y stands for a single bond, SO₂-, -S-, -CO-, -O-, C₁- to C₆-alkylene, C₂- to C₅-alkylidene, C₆- to C₁₂-arylene, which can optionally be condensed with further aromatic rings containing hetero atoms, or for a C₅- to C₆-cycloalkylidene residue, which can be singly or multiply substituted with C₁- to C₄-alkyl, preferably for a single bond, -O-, isopropylidene or for a C₅- to C₆-cycloalkylidene residue, which can be singly or multiply substituted with C₁- to C₄-alkyl,
V stands for oxygen, C₂- to C₆-alkylene or C₃- to C₆-alkylidene, preferably for oxygen or C₃-alkylene,
p, q and r mutually independently each stand 0 or 1,
if q = 0, W is a single bond, if q = 1 and r = 0 is, W stands for -O-, C₂- to C₆-alkylene or C₃- to C₆-alkylidene, preferably for -O- or C₃-alkylene,
if q = 1 and r = 1, W and V mutually independently stand for C₂- to C₆-alkylene or C₃- to C₆-alkylidene, preferably for C₃ alkylene,
Z stands for C₁- to C₆-alkylene, preferably C₂-alkylene,
o stands for an average number of repeating units from 10 to 500, preferably 10 to 100 and
m stands for an average number of repeating units from 1 to 10, preferably 1 to 6, particularly preferably 1.5 to 5.

It is also possible to use dihydroxyaryl compounds, in which two or more siloxane blocks of general formula (1a) are linked via terephthalic acid and/or isophthalic acid under formation of ester groups.

Especially preferable are (poly)siloxanes of the formulae (2) and (3) 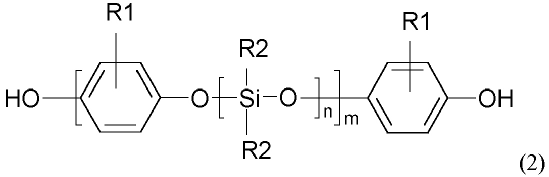 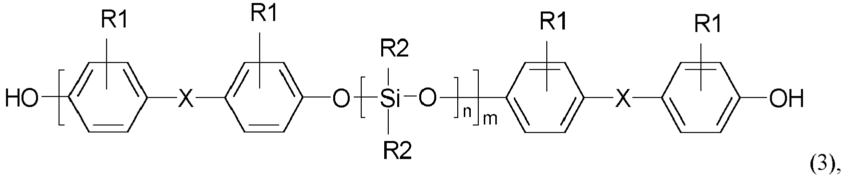 wherein R¹ stands for hydrogen, C₁- to C₄-alkyl, preferably for hydrogen or methyl and especially preferably for hydrogen,
R² mutually independently stand for aryl or alkyl, preferably for methyl,
X stands for a single bond, -SO₂-, -CO-, -O-, -S-, C₁- to C₆-alkylene, C₂- to Cs-alkylidene or for C₆-to C₁₂-arylene, which can optionally be condensed with further aromatic rings containing hetero atoms,
X stands for a single bond, -SO₂-, -CO-, -O-, -S-, C₁- to C₆-alkylene, C₂- to C₅-alkylidene, C₅- to C₁₂-cycloalkylidene or for C₆- to C₁₂-arylene, which can optionally be condensed with further aromatic rings containing hetero atoms,
X preferably stands for a single bond, isopropylidene, C₅- to C₁₂-cycloalkylidene or oxygen, and especially preferably stands for isopropylidene,
n means an average number from 10 to 400, preferably 10 and 100, especially preferably 15 to 50 and
m stands for an average number from 1 to 10, preferably 1 to 6 and especially preferably from 1.5 to 5.

Also preferably the siloxane block can be derived from one of the following structures: 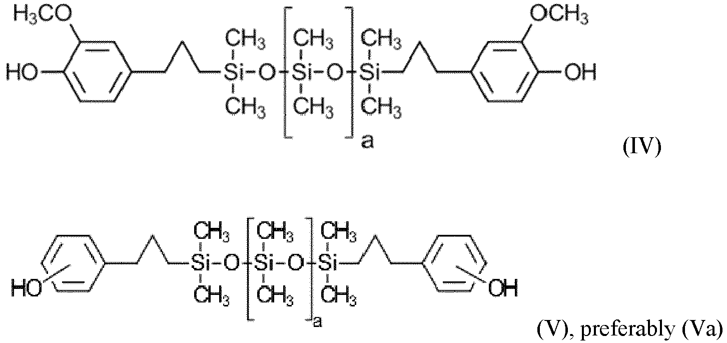 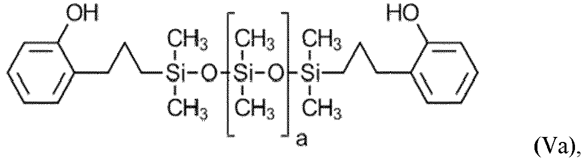 or 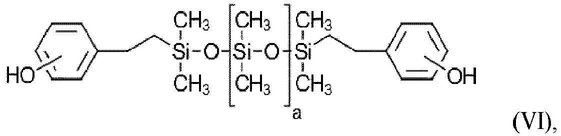 wherein a in formulae (IV), (V) und (VI) means an average number from 10 to 400, preferably from 10 to 100 and especially preferably from 15 to 50.

It is equally preferable, that at least two of the same or different siloxane blocks of the general formulae (IV), (V) or (VI) are linked via terephthalic acid and/isophthalic acid under formation of ester groups.

It is also preferable, if p = 0 in formula (1a), V stands for C₃-alkylene,
if r = 1, Z stands for C₂-alkylene, R⁸ and R⁹ stand for methyl,
if q = 1, W stands for C₃-alkylene,
if m = 1, R⁵ stands for hydrogen or C₁- to C₄-alkyl, preferably for hydrogen or methyl, R⁶ and R⁷ mutually independently stand for C₁- to C₄-alkyl, preferably methyl, and o stands for 10 to 500.

Copolycarbonates with monomer units of the general formula (1a), in particular with bisphenol A, and in particular the production of those copolycarbonates are described in WO 2015/052106 A2.

As examples of aromatic polycarbonate suitable for the present invention, mention can be made of those produced from bisphenol A and phosgene, and sold under the trade name Makrolon^{®} 2400, Makrolon^{®} 2600, Makrolon^{®} 2800, Makrolon^{®} 3100 by Covestro Co., Ltd. Very particularly preferred, the polycarbonate of the compositions according to the invention is bisphenol A based homopolycarbonate.

The aromatic polycarbonate is present in the polycarbonate composition in an amount ranging from 55 wt.% to 92 wt.%, preferably 60 wt.% to 90 wt.%, more preferably 65 wt.% to 90 wt.%, relative to the total weight of the composition.

### Component B

The polycarbonate compositions according to the present invention comprise glass fibers as component B. Component B is one type of glass fibers or a mixture of two or more different types of glass fibers.

Glass fibers are silica-based glass compounds that contain several metal oxides which can be tailored to create different types of glass. The main oxide is silica in the form of silica sand; the other oxides such as calcium, sodium and aluminum are incorporated to reduce the melting temperature and impede crystallization.

All glass fiber types, such as A, C, D, E, M, S, R, T glass fibers (as described in chapter 5.2.3, pages 43-48 of Additives for Plastics Handbook, 2nd ed, John Murphy), or any mixtures thereof or mixtures thereof may be used.

Glass fibers may have a round cross-section or a non-circular cross-section (so called "flat glass fibers"), including oval, elliptical or rectangular. The glass fibers may be added as chopped glass fibers or as milled glass fibers.

Advantageously, the glass fiber is present in the polycarbonate composition in an amount ranging from 5 wt.% to 40 wt.%, preferably from 10 wt.% to 30 wt.%, relative to the total weight of the composition.

### Component C

The polycarbonate compositions according to the present invention comprise a fluorine-containing metal organic sulfonate as component C.

The incorporation of fluorine-containing metal organic sulfonate improves the flame resistance of the polycarbonate compositions of the present invention.

Examples of the metals contained in the fluorine-containing metal organic sulfonates include alkali metals such as lithium (Li), sodium (Na), potassium (K), rubidium (Rb) and cesium (Cs); alkali earth metals such as magnesium (Mg), calcium (Ca), strontium (Sr) and barium (Ba); and aluminum (Al), titanium (Ti), iron (Fe), cobalt (Co), nickel (Ni), copper (Cu), zinc (Zn), zirconium (Zr), molybdenum (Mo), etc. Of those, an alkali metal or an alkali earth metal is preferable.

Preferably, the metal salt of fluorine-containing organic sulfonic acid contained is selected from the group consisting of alkali metal salts and alkaline earth metal salts, even more preferable is an alkali metal salt, wherein the metal is preferably sodium, potassium or cesium. Examples of the metal organic sulfonates include lithium (Li) fluorine-containing organic sulfonate, sodium (Na) fluorine-containing organic sulfonate, potassium (K) fluorine-containing organic sulfonate, rubidium (Rb) fluorine-containing organic sulfonate, cesium (Cs) fluorine-containing organic sulfonate, magnesium (Mg) fluorine-containing organic sulfonate, calcium (Ca) fluorine-containing organic sulfonate, strontium (Sr) fluorine-containing organic sulfonate, barium (Ba) fluorine-containing organic sulfonate, etc. Of those, in particular, alkali metal fluorine-containing organic sulfonates are preferable, including sodium (Na) fluorine-containing organic sulfonate, potassium (K) fluorine-containing organic sulfonate compounds, cesium (Cs) fluorine-containing organic sulfonate compounds, etc.

Preferred examples of the metal salts of fluorine-containing organic sulfonic acid include metal salts of fluorine-containing aliphatic sulfonic acid, metal salts of fluorine-containing aliphatic sulfonimide.

Specific examples of preferred fluorine-containing metal organic sulfonates include:
i) metal salts of fluorine-containing aliphatic sulfonic acids such as:
   alkali metal salts of fluorine-containing aliphatic sulfonic acids having at least one C-F bond in the molecule such as potassium perfluorobutane sulfonate, lithium perfluorobutane sulfonate, sodium perfluorobutane sulfonate, cesium perfluorobutane sulfonate, lithium trifluoromethane sulfonate, sodium trifluoromethane sulfonate, potassium trifluoromethane sulfonate, potassium perfluoroethane sulfonate and potassium perfluoropropane sulfonate;
   alkali earth metal salts of fluorine-containing aliphatic sulfonic acids having at least one C-F bond in the molecule such as magnesium perfluorobutane sulfonate, calcium perfluorobutane sulfonate, barium perfluorobutane sulfonate, magnesium trifluoromethane sulfonate, calcium trifluoromethane sulfonate, and barium trifluoromethane sulfonate;
   alkali metal salts of fluorine-containing aliphatic disulfonic acids having at least one C-F bond in the molecule such as disodium perfluoromethane disulfonate, dipotassium perfluoromethane disulfonate, sodium perfluoroethane disulfonate, dipotassium perfluoroethane disulfonate, dipotassium perfluoropropane disulfonate, dipotassium perfluoroisopropane disulfonate, disodium perfluorobutane disulfonate, potassium perfluorobutane disulfonate, dipotassium perfluorobutane disulfonate and dipotassium perfluorooctane disulfonate;
ii) metal salts of fluorine-containing aliphatic sulfonimides such as:
   alkali metal salts of fluorine-containing aliphatic disulfonimides having at least one C-F bond in the molecule such as lithium bis(perfluoropropanesulfonyl)imide, sodium bis(perfluoropropanesulfonyl)imide, potassium bis(perfluoropropanesulfonyl)imide, lithium bis(perfluorobutanesulfonyl)imide, sodium bis(perfluorobutanesulfonyl)imide, potassium bis(perfluorobutanesulfonyl)imide, potassium trifluoromethane(pentafluoroethane)sulfonylimide, sodium trifluoromethane(nonafluorobutane)sulfonylimide, potassium trifluoromethane(nonafluorobutane)sulfonylimide, trifluoromethane, etc.;
   alkali metal salts of cyclic fluorine-containing aliphatic sulfonimides having at least one C-F bond in the molecule such as lithium cyclo-hexafluoropropane-l,3-bis(sulfonyl)imide, sodium cyclo-hexafluoropropane-l,3-bis(sulfonyl)imide, and potassium cyclo-hexafluoropropane-1,3-bis(sulfonyl)imide.

Among those, more preferable are metal salts of fluorine-containing aliphatic sulfonic acids.

As the metal salt of fluorine-containing aliphatic sulfonic acids, preferable are alkali metal salts of fluorine-containing aliphatic sulfonic acids having at least one C-F bond in the molecule, particularly preferable are alkali metal salts of perfluoroalkane sulfonic acids. Specifically, potassium perfluorobutane sulfonate etc. are preferable. Particularly preferred, component C is potassium perfluorobutane sulfonate.

As commercial products of metal salts of fluorine-containing organic sulfonic acid, mention can be made of potassium perfluorobutane sulfonate, sold under the trade name Bayowet C4 by LANXESS AG Germany.

The metal salt of fluorine-containing organic sulfonic acid is present in the polycarbonate composition in an amount ranging from 0.04 wt.% to less than 0.10 wt.%, preferably from 0.05 wt.% to 0.09 wt.%, relative to the total weight of the composition.

Mechanical properties such as impact resistance, heat-resistance, and good electric characteristics, which a polycarbonate resin has, are not negatively influenced by addition of such metal salt of fluorine-containing organic sulfonic acid.

### Component D

The polycarbonate compositions according to the present invention comprise at least one polysilsesquioxane as component D.

The polysilsesquioxane, as used herein, has a trifunctional siloxane unit represented by RSiO_{1.5} (R is hydrogen or a monovalent organic group) (hereinafter, it may be referred to as a "T unit"), and contains the unit in an amount of 90% by mol or more, more preferably 95% by mol or more, furthermore preferably 100% by mol of the total siloxane units (M unit, D unit, T unit, Q unit),.

Meanwhile, the M unit represents a monofunctional siloxane unit represented by R₃SiO_{0.5} (R is hydrogen or a monovalent organic group), the D unit represents a bifunctional siloxane unit represented by R₂SiO_{1.0} (R is hydrogen or a monovalent organic group), and the Q unit represents a tetrafunctional siloxane unit represented by SiO_{2.0}.

The polysilsesquioxane may contain an M unit, in addition to the T unit.

Examples of R bonded to the polysilsesquioxane include hydrogen, C₁-C₁₂ alkyl, C₂-C₁₂alkenyl, C₁-C₁₂ alkoxy, C₁-C₁₂ acyl, C₃-C₈ cycloalkyl, and phenyl. Preferably, R is selected from hydrogen, C₁-C₆ alkyl, C₁-C₆ alkenyl, C₁-C₆ alkoxy, and phenyl. More preferably, R is selected from alkyl groups having 1 to 6 carbon atoms such as a methyl group, an ethyl group, a propyl group, a butyl group, and a hexyl group. Of those, as the organic group R, a methyl group is preferable, for the purpose of the present invention. Preferably, polymethylsilsesquioxane is used as the polysilsesquioxane, alone or in combination with other polysilsesquioxanes, particularly preferred alone.

Preferable polysilsesquioxanes as described above can be produced by a publicly known method. For example, as described in JP-A-01-217039, JP-A-5-125187 or JP-A-6-263875, the polysilsesquioxane is obtained by hydrolyzing organosilane under an acidic condition, adding and mixing an alkali aqueous solution to aqueous or aqueous/organic solvent of organosilanetriol, and leaving the product in a static state to thereby polycondensate the organosilanetriol.

As examples of commercial products of polysilsesquioxanes, mention can be made of polymethylsilsesquioxane sold under the trade name Ganzpearl SI-020 by GANZ CHEMICAL CO., LTD and under the trade name ABC E+308 by ABC NANOTECH CO., LTD.

Advantageously, the polysilsesquioxane is present in the polycarbonate compositions in an amount ranging from 2 wt.% to 9 wt.%, preferably 2 wt.% to 7 wt.%, relative to the total weight of the composition.

### Component E

The polycarbonate compositions according to the present invention comprise at least one anti-dripping agent as component E.

Preferably, the at least one anti-dripping agent used is selected from fluorinated polyolefins.

The fluorinated polyolefins are known (see "Vinyl and Related Polymers" by Schildknecht, John Wiley &Sons, Inc., New York, 1962, pages 484-494; "Fluoropolymers" by Wall, Wiley-Interscience, John Wiley &Sons, Inc., New York, Volume 13, 1970, pages 623-654; "Modern Plastics Encyclopedia", 1970-1971, Volume 47, No. 10 A, October 1970, McGraw-Hill, Inc., New York, pages 134 and 774; "Modern Plastics Encyclopaedia" , 1975-1976, October 1975, Volume 52, No. 10 A, McGraw-Hill, Inc., New York, pages 27, 28 and 472 and US-PS 3 671 487, 3 723 373 and 3 838 092).

Preferably, the anti-dripping agent is selected from polytetrafluoroethylene, polyvinylidene fluoride, tetrafluoroethylene/hexafluoropropylene copolymer, ethylene/tetrafluoroethylene copolymer, and a combination thereof.

More preferably, polytetrafluoroethylene (PTFE) is used as anti-dripping agent.

Polytetrafluoroethylene can be prepared by known processes, for example by polymerization of tetrafluoroethylene in an aqueous medium with a free radical-forming catalyst, for example sodium, potassium or ammonium peroxydisulfate, at pressures of from 7 to 71 kg/cm² and at temperatures of from 0 to 200 °C, preferably at temperatures of from 20 to 100 °C, for further details see e.g. US patent application 2 393 967 A.

Preferably, the fluorinated polyolefins have glass transition temperatures of over -30 °C, generally over 100 °C, fluorine contents of preferably from 65 to 76 wt. %, in particular from 70 to 76 wt. % (with the fluorinated polyolefins as 100 wt. %), mean particle diameters dso of from 0.05 to 1,000 µm, preferably from 0.08 to 20 µm.

For the purpose of the present invention, the dso average value of the particle size indicates a particle size, such that 50 wt.% of the relevant material has a larger particle size and 50 wt.% of the relevant material have a smaller particle size.

The dso average size of the particles in the composition of the present invention can be determined via a method known to the person skilled in the art, for example the dso value of the PTFE polymer particle size is measured via light scattering techniques (dynamic or laser) using the respective equipment, for example available from the companies Malvern (e.g. Mastersizer^{®} Micro or 3000) or Coulter (e.g. LS 230^{®}), as notably described in the method ISO 13320-1, in EP 1279694 A and in WO 2014/037375 A1. Laser light scattering, based on the light diffraction on the particles, is a suitable technique that can be applied to this kind of powder for determining particle size distribution. In particular the analysis can be performed on dry powder (for instance using a Coulter LS 13320^{®} instrument) or on the powder suspended into a water solution of apposite dispersant (a suitable apparatus is Coulter LS 230^{®}).

Preferably, the fluorinated polyolefins have a density of from 1.2 to 2.3 g/cm³, as measured according to the ASTM D1895:2017.

More preferably, the fluorinated polyolefins used according to the invention have mean particle diameters of from 0.05 to 20 µm, preferably from 0.08 to 10 µm, and a density of from 1.2 to 1.9 g/cm³.

Suitable fluorinated polyolefins which can be used in powder form are polytetrafluoroethylene having mean particle diameters of from 100 to 1000 µm and densities of from 2.0 g/cm³ to 2.3 g/cm³.

As an example of commercial products of polytetrafluoroethylene, mention can be made to those sold under the trade name Teflon^{®} by DuPont.

A master batch of polytetrafluoroethylene and styrene-acrylonitrile (SAN) in a weight ratio of 1:1, for example, ADS 5000 available from Chemical Innovation Co., Ltd., and POLYB FS-200 available from Han Nanotech Co., Ltd, can also be used.

Advantageously, the anti-dripping agent is present in the polycarbonate composition in an amount ranging from 0.11 wt.%to 1.0 wt.%, preferably from 0.2 wt.%to 0.8 wt.%, more preferably from 0.2 wt.% to 0.6 wt.%, relative to the total weight of the composition.

### Component F

In addition to components A-E mentioned above, the polycarbonate compositions according to the present invention can optionally comprise as component F one or more additional additives conventionally used in polymer compositions in conventional amounts. Such additives are lubricants, demoulding agents (e.g. pentaerythritol tetrastearate(PETS), glycerine monostearate(GMS), their carbonates), antioxidants, dyes, pigments, UV absorbers, impact modifiers, hydrolysis stabilizer, flame-retardants other than the metal salt of fluorine-containing organic sulfonic acid.

The person skilled in the art can select the type and the amount of the additional additives so as to not significantly adversely affect the desired properties of the polycarbonate composition according to the present invention.

For example, in some embodiments, the composition according to the present invention comprises a hydrolysis stabilizer selected from the group consisting of mineral clays, preferably, the hydrolysis stabilizer is selected from boehmite, kaolin, talc, and combinations thereof.

For example, in some embodiments, the composition according to the present invention comprises a metal salt of aromatic sulfonic acid as flame-retardant.

Preferably, the metal salt of aromatic sulfonic acid is selected from alkali metal salts of aromatic sulfonates having at least one aromatic group in the molecule such as dipotassium diphenylsulfone-3,3'-disulfonate, potassium diphenylsulfone-3-sulfonate, sodium benzene sulfonate, sodium (poly)styrene sulfonate, sodium paratoluene sulfonate, sodium (branched)dodecylbenzene sulfonate, sodium trichlorobenzene sulfonate, potassium benzene sulfonate, potassium styrene sulfonate, potassium (poly)styrene sulfonate, potassium paratoluene sulfonate, potassium (branched)dodecylbenzene sulfonate, potassium trichlorobenzene sulfonate, cesium benzene sulfonate, cesium (poly)styrene sulfonate, cesium paratoluene sulfonate, cesium (branched)dodecylbenzene sulfonate, and cesium trichlorobenzene sulfonate.

More preferably, the metal salt of aromatic sulfonic acid is selected from alkali metal salts of diphenylsulfone-sulfonic acid such as dipotassium diphenylsulfone-3,3'-disulfonate, and potassium diphenylsulfone-3 -sulfonate.

As commercial products of metal salts of aromatic sulfonic acid, mention can be made of potassium diphenylsulfon-3-sulphonate, sold under the trade name KSS by Arichem LLC.

Advantageously, if present, the metal salts of aromatic sulfonic acid is present in the polycarbonate composition in an amount of no more than 0.5 wt.%, relative to the total weight of the composition.

Preferably, the polycarbonate composition according to the present invention comprises the following components A-E, relative to the total weight of the composition
A) from 65 wt.% to 87 wt.% of at least one aromatic polycarbonate based on bisphenol A;
B) from 10 wt.% to 30 wt.% of a glass fiber;
C) from 0.05wt.% to 0.09 wt.% of a fluorine-containing metal organic sulfonate, wherein at least potassium perfluorobutane sulfonate is contained as fluorine-containing metal organic sulfonate, more preferably the fluorine-containing metal organic sulfonate is potassium perfluorobutane sulfonate;
D) from 2 wt.% to 7 wt.% of a polysilsesquioxane, wherein polymethylsilsesquioxane is contained as polysilsesquioxane, more preferably the polysilsesquioxane is polymethylsilsesquioxane; and
E) from 0.2 wt.% to 0.6 wt.% of an anti-dripping agent, wherein polytetrafluoroethylene is contained as anti-dripping agent, more preferably the anti-dripping agent is polytetrafluorethylene.

The inventors have discovered that the polycarbonate compositions according to the present invention have a good flame retardance even after 7 days immersion in hot water of 70 °C, and that an article with a thickness of 1.5 mm prepared from the compositions can achieve V0 performance before and after 7 days immersion in hot water of 70 °C.

### Preparation of the polycarbonate compositions

The polycarbonate compositions according to the present invention can be in the form of, for example, pellets, and can be prepared by a variety of methods involving intimate admixing of the materials desired in the composition.

For example, the materials desired in the composition are first blended in a high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding it directly into the extruder at the throat and/or downstream through a side stuffer. Additives can also be compounded into a masterbatch with a desired polymeric resin and fed into the extruder. The extruder is generally operated at a temperature higher than that necessary to cause the composition to flow. The extrudate is immediately quenched in a water bath and pelletized. The pellets can be one-fourth inch long or less as described. Such pellets can be used for subsequent molding, shaping or forming.

Melt blending methods are preferred due to the availability of melt blending equipment in commercial polymer processing facilities.

Illustrative examples of equipment used in such melt processing methods include co-rotating and counter-rotating extruders, single screw extruders, co-kneaders, and various other types of extrusion equipment.

The temperature of the melt in the processing is preferably minimized in order to avoid excessive degradation of the polymers. It is often desirable to maintain the melt temperature between 230°C and 350°C in the molten resin composition, although higher temperatures can be used provided that the residence time of the resin in the processing equipment is kept short.

In some cases, the melting composition exits from a processing equipment such as an extruder through small exit holes in a die. The resulting strands of the molten resin are cooled by passing the strands through a water bath. The cooled strands can be chopped into small pellets for packaging and further handling.

### Shaped articles

The polycarbonate compositions according to the present invention can be used, for example for the production of various types of shaped articles.

According to the second aspect, the present invention also provides a shaped article made from a polycarbonate composition according to the first aspect of the present invention.

As examples of such shaped articles mention can be made of, for example, films; profiles; all kinds of housing parts, e.g. for domestic appliances such as juice presses, coffee machines and mixers, or for office machines such as monitors, flat screens, notebooks, printers and copiers; sheets; tubes; electrical conduits; windows, doors and other profiles for the building sector (interior and exterior applications); electrical and electronic parts such as switches, plugs and sockets; and body parts or interior trim for commercial vehicles, especially for the motor vehicle sector.

In particular, the shaped article can be any of the following: interior trim for rail vehicles, ships, aeroplanes, buses and other motor vehicles, housings for electrical equipment containing small transformers, housings for information processing and transmission equipment, housings and sheathing for medical equipment, housings for safety devices, moulded parts for sanitary and bath fittings, covering grids for ventilation apertures and housings for garden tools, and battery packages.

### Preparation of shaped articles

The polycarbonate compositions according to the present invention can be processed into shaped articles by a variety of means such as injection moulding, extrusion moulding, blow moulding or thermoforming to form shaped articles.

According to the third aspect, the present invention provides a process for preparing a shaped article according to the second aspect of the present invention, comprising injection moulding, extrusion moulding, blow moulding or thermoforming the polycarbonate composition according to the first aspect of the present invention.

The examples which follow serve to illustrate the invention in greater detail.

### Examples

### Materials used

### Component A: aromatic polycarbonate

PC1: an aromatic polycarbonate (PC) resin based on bisphenol A having a melt volume flow rate MVR of 12 cm³ /10 min (according to DIN EN ISO 1133-1:2012-03 at a test temperature of 300°C under a 1.2 kg load), available as Makrolon^{®} 2600 from Covestro Polymer, Co., Ltd.

PC2: an aromatic polycarbonate (PC) resin based on bisphenol A having a melt volume flow rate MVR of 9.0 cm³ /10 min (according to DIN EN ISO 1133-1:2012-03 at a test temperature of 16 300°C under a 1.2 kg load), available as Makrolon^{®} 2800 from Covestro Polymer, Co., Ltd.

PC3: an aromatic polycarbonate (PC) resin based on bisphenol A having a melt volume flow rate MVR of 6.0 cm³ /10 min (according to DIN EN ISO 1133-1:2012-03 at a test temperature of 300°C under a 1.2 kg load), available as Makrolon^{®} 3100 from Covestro Polymer, Co., Ltd.

### Component B: glass fibers

GF1: Glass fiber, available as GF830S from Nitto Boseki.

GF2: Glass fiber, available as CS108 from Owens Corning.

GF3: Glass fiber, available as MF7980 from Lanxess AG Germany.

GF4: Glass fiber, available as GF937 from Nitto Boseki.

### Component C: fluorine-containing organic sulfonate

C1: Potassium perfluorobutane sulfonate, available as Bayowet C4 from LANXESS.

### Component D: polysilsesquioxane

D1: polymethylsilsesquioxane with a mean particle diameter: 0.8 µm determined by MALVERN MS2000, available as ABC E+308 from ABC NANOTECH CO., LTD.

### Component E: anti-dripping agent

E1: a masterbatch of polytetrafluoroethylene and Styrene-Acrylonitrile (SAN) in a weight ratio of 1:1, available as ADS 5000 from Chemical Innovation Co., Ltd., Thailand.

### Component F: additional additive

F1: an antioxidant, a mixture of 80 wt.% of Irgafos^{®} 168 (tris(2,4-ditert-butylphenyl) phosphite) and 20 wt.% of Irganox^{®} 1076 (2,6-ditert-butyl-4-(octadecanoxycarbonylethyl)phenol, available as Irganox^{®} B900 from BASF (China) Company Limited.

F2: a demoulding agent, pentaerythritol tetrastearate (PETS), available as Loxiol P 861 from Emery Oleochemicals Sdn Bhd Malaysia.

F3: a UV absorber, 2-(2H-benzotriazol-2-yl)-4-(1,1,3,3-tetramethylbutyl)phenol, available as TINUVIN^{®} 329 from BASF.

F4: a UV absorber, 2,2'-methylenebis(6-(benzotriazol-2-yl)-4-tert-octylphenol, available as TINUVIN^{®} 360 from BASF.

F5: Carbon black, available as BP800 from Carbon black pigment Cabot (China) pigment Ltd

F6: TiO₂, Kronos 2230 available form the company KRONOS.

F7: boehmite, a hydrolysis stabilizer, available as Pural^{®} 200 from Sasol Germany GmbH.

F8: potassium diphenylsulfone-3-sulfonate, available as Arichem KSS-FR from Arichem.

F9: stearyl stearate, a mold release agent, available as Loxiol^{®} G32 from Emery Oleochemicals Sdn Bhd Malaysia.

### Test methods

The physical properties of the compositions according to the examples were tested as follows.

The flame retardance was evaluated on 127 mm x 12.7 mm x 1.5 mm bars after conditioned for 48 hours at 23 °C and 50 RH according to UL94:2015.

The hydrolysis stability of the compositions prepared was assessed based on the change in flame retardancy class measured on 127 mm x 12.7 mm x 1.5 mm bars according to UL94:2015 before and after the bars were immerged into 70 °C water for 7 days according to UL746C: 2018.

### Inventive examples 1-10 (IE1-IE6) and comparative examples 1-4 (CE1-CE4)

The materials listed in Table 1 were compounded on a twin-screw extruder (ZSK-26) (Werner and Pfleider) at a speed of rotation of 225 rpm, a throughput of 20 kg/h, and a machine temperature of 260°C, and granulated. All parts by weight are calculated according to the material used in all inventive examples and comparative examples.

The granules were processed into corresponding test specimens on a 370S type injection moulding machine from the company Arburg with a melting temperature of 260 °C, a mold temperature 100 °C and injection speed of 50 mm/s.

The physical properties of compositions obtained were tested and the results were summarized in Table 1.

**Table 1**

| Components | | **CE1** | **CE2** | **IE1** | **IE2** | **IE3** | **IE4** | **IE5** | **CE3** | **IE6** | **IE7** | **IE8** | **IE9** | **CE4** | **IE10** |
|---|---|---|---|---|---|---|---|---|---|---|---|---|---|---|---|
| | | Wt.% | Wt.% | Wt.% | Wt.% | Wt.% | Wt.% | Wt.% | Wt.% | Wt.% | Wt.% | Wt.% | Wt.% | Wt.% | Wt.% |
| PC1 | Makrolon^{®} 2600 | 88.86 | 88.06 | 85.86 | 85.86 | 85.86 | 85.86 | 75.86 | - | 81.56 | 83.06 | - | - | 85.62 | 85.6 |
| PC2 | Makrolon^{®} 2800 | - | - | - | - | - | - | - | 10 | - | - | 10 | 10 | - | - |
| PC3 | Makrolon^{®} 3100 | - | - | - | - | - | - | - | 72.41 | - | - | 71.71 | 71.21 | - | - |
| GF1 | GF830S | - | - | - | 10 | - | - | - | - | - | - | - | - | - | - |
| GF2 | CS108 | - | - | - | - | 10 | - | - | 10 | - | | 10 | 10 | - | - |
| GF3 | MF7980 | - | - | - | - | - | 10 | - | - | - | - | - | - | - | - |
| GF4 | GF937 | 10 | 10 | 10 | - | - | - | 20 | - | 10 | 10 | - | - | 10 | 10 |
| C1 | Bayowet C4 | 0.09 | 0.09 | 0.09 | 0.09 | 0.09 | 0.09 | 0.09 | 0.09 | 0.09 | 0.09 | 0.09 | 0.09 | 0.03 | 0.05 |
| D1 | ABC E+308 | - | - | 3 | 3 | 3 | 3 | 3 | 1 | 7 | 5 | 2 | 2 | 3 | 3 |
| E1 | ADS 5000 | 0.5 | 0.5 | 0.5 | 0.5 | 0.5 | 0.5 | 0.5 | 0.3 | 0.5 | 0.5 | 0.5 | 0.5 | 0.5 | 0.5 |
| F1 | Irganox^{®} B900 | 0.15 | 0.15 | 0.15 | 0.15 | 0.15 | 0.15 | 0.15 | | 0.15 | 0.15 | | | 0.15 | 0.15 |
| F2 | Loxiol P 861 | 0.4 | 0.4 | 0.4 | 0.4 | 0.4 | 0.4 | 0.4 | 0.45 | 0.4 | 0.4 | 0.45 | 0.45 | 0.4 | 0.4 |
| F3 | TINUVIN^{®} 329 | | | | | | | | 0.25 | | | 0.25 | 0.25 | | |
| F4 | TINUVIN^{®} 360 | | 0.3 | | | | | | | | 0.3 | | | | |
| F5 | BP800 | | | | | | | | | 0.3 | | | | 0.3 | 0.3 |
| F6 | TiO₂ | | | | | | | | 5 | | | 5 | 5 | | |
| F7 | Pural^{®} 200 | - | 0.5 | - | - | - | - | - | 0.5 | | 0.5 | | 0.5 | | |
| F8 | KSS-FR | - | - | - | - | - | - | - | | - | | | | | |
| Flame-retardant level at 1.5 mm | | | | | | | | | | | | | | | |
| Before immersion in water | | V0 | V0 | V0 | V0 | V0 | V0 | V0 | V0 | V0 | V0 | V0 | V0 | V0 | V0 |
| After immersion in water at 70°C for 7 days | | V1 | V1 | V0 | V0 | V0 | V0 | V0 | V1 | V0 | V0 | V0 | V0 | V2 | V0 |
| Hydrolysis stability | | **Fail** | **Fail** | **Pass** | **Pass** | **Pass** | **Pass** | **Pass** | **Fail** | **Pass** | **Pass** | **Pass** | **Pass** | **fail** | **Pass** |

The compositions of comparative examples 1-2 (CE1-CE2) not comprising component D demonstrate a flame-retardant level of V-0 before immersion in water, and a flame-retardant level of V-1 after immersion in water at 70 °C for 7 days, meaning that the hydrolysis resistance is not acceptable.

The composition of comparative example 3 (CE3) comprising all of components A-E, wherein the amount of component D is 1 wt.%, relative to the total weight of the composition, demonstrates a flame-retardant level of V0 before immersion in water, and a flame-retardant level of V1 after immersion in water at 70 °C for 7 days, meaning that the hydrolysis resistance is not acceptable.

The composition of comparative example 4 (CE4) comprising all of components A-E, wherein the amount of component C is 0.03 wt.%, relative to the total weight of the composition, demonstrates a flame-retardant level of V0 before immersion in water, and a flame-retardant level of V2 after immersion in water at 70 °C for 7 days, meaning that the hydrolysis resistance is not acceptable.

The compositions of inventive examples 1-9 (IE1-IE9) demonstrate a flame-retardant level of V0 before immersion in water, and a flame-retardant level of V0 after immersion in water at 70 °C for 7 days, meaning that the hydrolysis resistance is excellent.

### Inventive examples 11-18 (IE7-IE18) and comparative examples 5-6

Similarly, the materials listed in Table 2 were compounded, the physical properties of the compositions obtained were tested and the results were summarized in Table 2.

**Table 2**

| Components | | **CE5** | **CE6** | **IE11** | **IE12** | **IE13** | **IE14** | **IE15** | **IE16** | **IE17** | **IE18** |
|---|---|---|---|---|---|---|---|---|---|---|---|
| | | Wt.% | Wt.% | Wt.% | Wt.% | Wt.% | Wt.% | Wt.% | Wt.% | Wt.% | Wt.% |
| PC1 | Makrolon^{®} 2600 | - | - | - | - | - | - | - | - | - | 85.26 |
| PC2 | Makrolon^{®} 2800 | 10 | 10 | 10 | 76.81 | 75.81 | 10 | 10 | 67.06 | 66.06 | - |
| PC3 | Makrolon^{®} 3100 | 71.71 | 72.11 | 71.41 | 5 | 5 | 70.71 | 70.21 | 5 | 5 | - |
| GF2 | CS108 | 10 | 10 | 10 | 10 | 10 | 10 | 10 | - | - | - |
| GF4 | GF937 | - | - | - | - | - | - | - | 20 | 20 | 10 |
| C1 | Bayowet C4 | 0.09 | 0.09 | 0.09 | 0.09 | 0.09 | 0.09 | 0.09 | 0.09 | 0.09 | 0.09 |
| D1 | ABC E+308 | 2 | 2 | 2 | 2 | 3 | 3 | 3 | 2 | 3 | 3 |
| E1 | ADS 5000 | - | 0.1 | 0.3 | 0.4 | 0.4 | 0.5 | 0.5 | 0.4 | 0.4 | 0.8 |
| F1 | Irganox^{®} B900 | - | - | - | - | - | - | - | - | - | 0.15 |
| F2 | Loxiol P 861 | 0.45 | 0.45 | 0.45 | 0.45 | 0.45 | 0.45 | 0.45 | - | - | 0.4 |
| F3 | TINUVIN^{®}329 | 0.25 | 0.25 | 0.25 | 0.25 | 0.25 | 0.25 | 0.25 | - | - | - |
| F5 | BP800 | - | - | - | - | - | - | - | - | - | 0.3 |
| F6 | TiO₂ | 5 | 5 | 5 | 5 | 5 | 5 | 5 | 5 | 5 | - |
| F7 | Pural^{®} 200 | 0.5 | - | 0.5 | - | - | - | 0.5 | - | - | - |
| F9 | Loxiol^{®} G32 | - | - | - | - | - | - | - | 0.45 | 0.45 | - |
| Flame-retardant level at 1.5 mm | | | | | | | | | | | |
| Before immersion in water | | V2 | V2 | V0 | V0 | V0 | V0 | V0 | V0 | V0 | V0 |
| After immersion in water at 70°C for 7 days | | Fail^{*} | Fail^{*} | V0 | V0 | V0 | V0 | V0 | V0 | V0 | V0 |
| Hydrolysis stability | | **Fail** | **Fail** | **Pass** | **Pass** | **Pass** | **Pass** | **Pass** | **Pass** | **Pass** | **Pass** |
| Fail ^{*}: indicates that V2 is not passed. | | | | | | | | | | | |

The composition of comparative example 5 (CE5) not comprising component E demonstrates a flame-retardant level of V2 before immersion in water, and does not pass a flame-retardant level of V2 after immersion in water at 70 °C for 7 days, meaning that the hydrolysis resistance is not acceptable.

The composition of comparative example 6 (CE6) comprising all of components A-E, wherein the amount of component E is 0.1 wt.%, relative to the total weight of each composition, demonstrates a flame-retardant level of V2 before immersion in water, and does not pass a flame-retardant level of V2 after immersion in water at 70 °C for 7 days, meaning that the hydrolysis resistance is not acceptable.

The compositions of inventive examples 11-18 (IE11-IE18) demonstrate a flame-retardant level of V0 before immersion in water, and a flame-retardant level of V0 after immersion in water at 70 °C for 7 days, meaning that the hydrolysis resistance is excellent.

### Inventive examples 19-28 (IE19-IE28) and comparative examples 7-10 (CE7-CE10)

Similarly, the materials listed in Table 3 were compounded, the physical properties of the compositions obtained were tested and the results were summarized in Table 3.

**Table 3**

| Components | | **CE7** | **CE8** | **CE9** | **CE10** | **IE19** | **IE20** | **IE21** | **IE22** | **IE23** | **IE24** | **IE25** | **IE26** | **IE27** | **IE28** |
|---|---|---|---|---|---|---|---|---|---|---|---|---|---|---|---|
| | | Wt.% | Wt.% | Wt.% | Wt.% | Wt.% | Wt.% | Wt.% | Wt.% | Wt.% | Wt.% | Wt.% | Wt.% | Wt.% | Wt.% |
| PC1 | Makrolon^{®} 2600 | 88.4 | 88.36 | 88.25 | 85.45 | 85.76 | 85.7 | 85.2 | 84.86 | 84.76 | 82.86 | 82.66 | 75.66 | 72.66 | 65.66 |
| GF4 | GF937 | 10 | 10 | 10 | 10 | 10 | 10 | 10 | 10 | 10 | 10 | 10 | 20 | 20 | 30 |
| C1 | Bayowet C4 | 0.05 | 0.09 | - | - | 0.09 | 0.05 | 0.05 | 0.09 | 0.09 | 0.09 | 0.09 | 0.09 | 0.09 | 0.09 |
| D1 | ABC E+308 | - | - | - | 3 | 3 | 3 | 3 | 3 | 3 | 5 | 5 | 3 | 5 | 3 |
| E1 | ADS 5000 | 0.5 | 0.5 | 0.5 | 0.5 | 0.5 | 0.5 | 0.5 | 0.5 | 0.5 | 0.5 | 0.5 | 0.5 | 0.5 | 0.5 |
| F1 | Irganox^{®} B900 | 0.15 | 0.15 | 0.15 | 0.15 | 0.15 | 0.15 | 0.15 | 0.15 | 0.15 | 0.15 | 0.15 | 0.15 | 0.15 | 0.15 |
| F2 | Loxiol P 861 | 0.4 | 0.4 | 0.4 | 0.4 | 0.4 | 0.4 | 0.4 | 0.4 | 0.4 | 0.4 | 0.4 | 0.4 | 0.4 | 0.4 |
| F4 | TINUVIN^{®} 360 | - | - | - | - | - | - | - | 0.3 | 0.3 | 0.3 | 0.3 | - | 0.3 | - |
| F5 | BP800 | 0.3 | 0.3 | 0.3 | 0.3 | - | - | - | - | - | - | - | - | - | - |
| F7 | Pural^{®} 200 | - | - | - | - | - | - | 0.5 | 0.5 | 0.5 | 0.5 | 0.5 | - | 0.5 | - |
| F8 | KSS-FR | 0.2 | 0.2 | 0.4 | 0.2 | 0.1 | 0.2 | 0.2 | 0.2 | 0.3 | 0.2 | 0.4 | 0.2 | 0.4 | 0.2 |
| Flame-retardant level at 1.5 mm | | | | | | | | | | | | | | | |
| Before immersion in water | | V2 | V0 | V1 | Fail^{*} | V0 | V0 | V0 | V0 | V0 | V0 | V0 | V0 | V0 | V0 |
| After immersion in water at 70°C for 7 days | | V2 | V1 | V2 | Fail^{*} | V0 | V0 | V0 | V0 | V0 | V0 | V0 | V0 | V0 | V0 |
| Hydrolysis stability | | **Fail** | **Fail** | **Fail** | **Fail** | **Pass** | **Pass** | **Pass** | **Pass** | **Pass** | **Pass** | **Pass** | **Pass** | **Pass** | **Pass** |
| Fail ^{∗}: indicates that V2 is not passed. | | | | | | | | | | | | | | | |

The composition of comparative example 7 (CE7) not comprising component D demonstrates a flame-retardant level of V2 before immersion in water, and a flame-retardant level of V2 after immersion in water at 70 °C for 7 days, meaning that the hydrolysis resistance is not acceptable.

The composition of comparative example 8 (CE8) not comprising component D demonstrates a flame-retardant level of V0 before immersion in water, and a flame-retardant level of V1 after immersion in water at 70 °C for 7 days, meaning that the hydrolysis resistance is not acceptable.

The composition of comparative example 9 (CE9) not comprising components C and D demonstrates a flame-retardant level of V1 before immersion in water, and a flame-retardant level of V2 after immersion in water at 70 °C for 7 days, meaning that the hydrolysis resistance is not acceptable.

The composition of comparative example 10 (CE10) not comprising component C demonstrates a flame-retardant level of V1 before immersion in water, and a flame-retardant level of V2 after immersion in water at 70 °C for 7 days, meaning that the hydrolysis resistance is not acceptable.

The compositions of inventive examples 19-28 (IE19-IE28) demonstrates a flame-retardant level of V0 before immersion in water, and a flame-retardant level of V0 after immersion in water at 70 °C for 7 days, meaning that the hydrolysis resistance is excellent.

## Claims

1. A polycarbonate composition comprising the following components A-E, relative to the total weight of the composition:
A) from 55 wt.% to 92 wt.% of at least one aromatic polycarbonate;
B) from 5 wt.% to 40 wt.% of a glass fiber;
C) from 0.04 wt.% to less than 0.10 wt.% of a fluorine-containing metal organic sulfonate;
D) from 2 wt.% to 9 wt.% of a polysilsesquioxane; and
E) from 0.11 wt.% to 1.0 wt.% of an anti-dripping agent.

2. Composition according to claim 1, wherein the metal in the fluorine-containing metal organic sulfonate is one or more selected from alkali metals such as lithium (Li), sodium (Na), potassium (K), rubidium (Rb) and cesium (Cs); alkali earth metals such as magnesium (Mg), calcium (Ca), strontium (Sr) and barium (Ba); and aluminum (Al), titanium (Ti), iron (Fe), cobalt (Co), nickel (Ni), copper (Cu), zinc (Zn), zirconium (Zr), molybdenum (Mo).

3. Composition according to claim 1 or 2, wherein the fluorine-containing metal organic sulfonate is selected from the group consisting of metal salts of fluorine-containing aliphatic sulfonic acid, metal salts of fluorine-containing aliphatic sulfonimide, and combinations thereof.

4. Composition according to any of claims 1-3, wherein the fluorine-containing metal organic sulfonate is selected from the group consisting of potassium perfluorobutane sulfonate, lithium perfluorobutane sulfonate, sodium perfluorobutane sulfonate, cesium perfluorobutane sulfonate, lithium trifluoromethane sulfonate, sodium trifluoromethane sulfonate, potassium trifluoromethane sulfonate, potassium perfluoroethane sulfonate, potassium perfluoropropane sulfonate, and combinations thereof.

5. Composition according to any of Claims 1-4, wherein the polysilsesquioxane has a trifunctional siloxane unit represented by RSiO_{1.5}, R is selected from hydrogen, C₁-C₁₂ alkyl, C₂-C₁₂ alkenyl, C₁-C₁₂ alkoxy, C₁-C₁₂ acyl, C₃-C₈ cycloalkyl, hydroxy, and phenyl, and contains the unit in an amount of 90% by mol or more, preferably 95% by mol or more, more preferably 100% by mol of the total siloxane units.

6. Composition according to any of Claims 1-5, wherein the anti-dripping agent is selected from polytetrafluoroethylene, polyvinylidene fluoride, tetrafluoroethylene/hexafluoropropylene copolymer, ethylene/tetrafluoroethylene copolymer, and a combination thereof.

7. Composition according to any of Claims 1-6, further comprising lubricants, demoulding agents, antioxidants, dyes, pigments, UV absorbers, impact modifiers, hydrolysis stabilizer, flame-retardants other than the metal salt of fluorine-containing organic sulfonic acid.

8. Composition according to any of Claims 1-7, further comprising a hydrolysis stabilizer selected from the group consisting of mineral clays, preferably, the hydrolysis stabilizer is selected from boehmite, kaolin, talc, citric acid and combinations thereof.

9. Composition according to any of claims 1-8, further comprising a metal salt of aromatic sulfonic acid, preferably selected from dipotassium diphenylsulfone-3,3'-disulfonate, potassium diphenylsulfone-3-sulfonate, sodium benzene sulfonate, sodium (poly)styrene sulfonate, sodium paratoluene sulfonate, sodium (branched)dodecylbenzene sulfonate, sodium trichlorobenzene sulfonate, potassium benzene sulfonate, potassium styrene sulfonate, potassium (poly)styrene sulfonate, potassium paratoluene sulfonate, potassium (branched)dodecylbenzene sulfonate, potassium trichlorobenzene sulfonate, cesium benzene sulfonate, cesium (poly)styrene sulfonate, cesium paratoluene sulfonate, cesium (branched)dodecylbenzene sulfonate, cesium trichlorobenzene sulfonate, and combinations thereof.

10. Composition according to claim 1 comprising the following components A-E, relative to the total weight of the composition:
A) from 65 wt.% to 87 wt.% of at least one aromatic polycarbonate based on bisphenol A;
B) from 10 wt.% to 30 wt.% of a glass fiber;
C) from 0.05 wt.% to 0.09 wt.% of a fluorine-containing metal organic sulfonate, wherein at least potassium perfluorobutane sulfonate is contained as fluorine-containing metal organic sulfonate, more preferably the fluorine-containing metal organic sulfonate is potassium perfluorobutane sulfonate;
D) from 2 wt.% to 7 wt.% of a polysilsesquioxane, wherein polymethylsilsesquioxane is contained as polysilsesquioxane, more preferably the polysilsesquioxane is polymethylsilsesquioxane; and
E) from 0.2 wt.% to 0.6 wt.% of an anti-dripping agent, wherein polytetrafluoroethylene is contained as anti-dripping agent, more preferably the anti-dripping agent is polytetrafluorethylene.

11. A shaped article made from the composition according to any of claims 1 to 10.
